# EUROPÄISCHE PATENTANMELDUNG

(11) **EP 3 992 737 A1**
(43) Veröffentlichungstag der Anmeldung: **04.05.2022**
(21) Anmeldenummer: 20204334.5
(22) Anmeldetag: 28.10.2020
(51) Int. Cl.: G05B 19/418

(54) **VERFAHREN ZUR DATENKOMMUNIKATION ZWISCHEN EINER LEITEBENE UND EINER FELDEBENE EINES INDUSTRIELLEN SYSTEMS**

(71) Anmelder: Siemens Aktiengesellschaft, 80333 München (DE)
(72) Erfinder: Tritchkov, Ivan, 91058 Erlangen (DE)

(57) **Zusammenfassung**

Die Erfindung betrifft ein Verfahren (100) zur Datenkommunikation zwischen einer Leitebene (201) und einer Feldebene (203) eines industriellen Systems (200), umfassend:
Empfangen (101) einer Datenabfrage einer Leitebenenanwendung (205) der Leitebene (201) an ein Feldgerät (207) der Feldebene (203) durch ein Datenkommunikationsmodul (209);
Übertragen (103) der Datenabfrage der Leitebenenanwendung (205) durch das Datenkommunikationsmodul (209) an das Feldgerät (207);
Empfangen (105) von Antwortdaten des Feldgeräts (207) auf die Datenabfrage durch das Datenkommunikationsmodul (209);
Überprüfen (107) einer Datenqualität der Antwortdaten durch ein Überprüfungsmodul (211) des Datenkommunikationsmoduls (209); und
Falls bei der Überprüfung eine unzureichende Datenqualität ermittelt wird, Ausführen (109) einer Korrekturmaßnahme durch das Überprüfungsmodul (211) zum Korrigieren der fehlerhaften Antwortdaten.

## Beschreibung

Die Erfindung betrifft ein Verfahren zur Datenkommunikation zwischen einer Leitebene und einer Feldebene eines industriellen Systems.

Industrie 4.0 ist ein Begriff, der die laufende vierte industrielle Revolution und den Trend zur Digitalisierung in den Industriebereichen beschreibt. Die Kernbegriffe hinter Industrie 4.0 sind die intelligente Vernetzung industrieller Maschinen und Geräte und der Einsatz neuartiger Technologien wie cyber-physikalische Systeme (CPS), das industrielle Internet der Dinge (IIoT), Cloud Computing, Cognitive Computing und künstliche Intelligenz in der Fertigung. Die Kombination miteinander verbundener industrieller Geräte und der Einsatz neuester Digitalisierungstechnologien ermöglichen es nicht nur, die Herstellungsprozesse zu optimieren, die Produktivität zu steigern und das Beste aus dem Produktionsprozess herauszuholen, sondern eröffnen auch eine ganz neue Welt von Geschäftsmöglichkeiten. Viele Unternehmen weltweit befinden sich daher mitten in einer digitalen Transformation, die den Prozess der Übernahme von Daten und digitalen Lösungen für alle Aktivitäten über den gesamten Geschäftslebenszyklus hinweg umfasst.

Eine der größten Hürden, die dem Erreichen der von Industrie 4.0 versprochenen Vorteile im Wege stehen, ist die Qualität der Daten, die von den Industriegeräten produziert und verarbeitet werden. Moderne industrielle Anwendungen zum Beispiel, aber auch etablierte Fertigungssysteme aus der so genannten "Büroetage" zielen darauf ab, auf KI oder Datenanalyse basierende Methoden zur Vorhersage von Wartung oder sogar Ausfällen, aber auch zur Überwachung des aktuellen Produktionszustandes einzusetzen. Dazu lernen sie aus der Vergangenheit und stützen sich auf reale Betriebsdaten, die direkt von Prosumern gesammelt oder gesendet werden. Ein Prosumer ist hierbei eine Systemkomponente oder ein Hardware-Gerät, das Daten sowohl produziert als auch konsumiert. Beispiele für Prosumer sind Feldgeräte, beispielsweise CNC-Maschinen, Fräs- und Bohrmaschinen, Industrieroboter, oder Sensoren und Aktoren in anderen industriellen Geräten wie Fahrzeugen oder medizinischen Geräten.

Die von den Prosumern gesammelten Daten durchlaufen in der Regel eine ganze Reihe von Datenaggregationsschritten in der Datenschicht des industriellen Systems, wobei die Datenschicht als Verbindung zwischen der Feldebene, in der die Feldgeräte angeordnet sind, und einer Leitebene darstellt, in der neben der Steuerung von Prozessen des industriellen Systems auch managementbasierte Entscheidung bezüglich der Ausrichtung des Unternehmens getroffen werden können. Dies hat einen zweifachen Grund: i) die großen Datenmengen werden zu kleineren und leichter zu handhabenden Datensätzen aggregiert und ii) die Daten werden für die Verwendung durch die Anwendungsschicht aufbereitet (d.h. formatiert und verpackt). Dies ist ein sehr wichtiger Schritt, da fehlerhafte Daten, die von den Geräten geliefert werden, den überwachten Zustand des Geräts oder des Produktionsprozesses verfälschen können. So würden Datenanalysemethoden, KI-Algorithmen oder auch einfache Visualisierungstechniken wie Dashboarding Ergebnisse liefern, die nicht der Realität entsprechen.

Die Aufgabe der vorliegenden Erfindung ist es, ein verbessertes Verfahren zur Datenkommunikation zwischen Anwendungen einer Leitebene und Feldgeräten von Automatisierungssystemen bereitzustellen, das eine erhöhten Datenqualität ermöglicht.

Diese Aufgabe wird durch das Verfahren des unabhängigen Anspruchs gelöst. Weiterbildungen sind in den abhängigen Patentansprüchen angegeben.

Nach einem Aspekt der Erfindung wird ein Verfahren zur Datenkommunikation zwischen einer Leitebene und einer Feldebene eines industriellen Systems bereitgestellt, wobei das Verfahren umfasst:
Empfangen einer Datenabfrage einer Leitebenenanwendung des Leitstands an ein Feldgerät der Feldebene durch ein Datenkommunikationsmodul;
Übertragen der Datenabfrage der Leitebenenanwendung durch das Datenkommunikationsmodul an das Feldgerät;
Empfangen von Antwortdaten des Feldgeräts auf die Datenabfrage durch das Datenkommunikationsmodul;
Überprüfen einer Datenqualität der Antwortdaten durch ein Überprüfungsmodul des Datenkommunikationsmoduls; und Falls bei der Überprüfung eine unzureichende Datenqualität ermittelt wird, Ausführen einer Korrekturmaßnahme durch das Überprüfungsmodul zum Korrigieren der fehlerhaften Antwortdaten.

Hierdurch kann der technische Vorteil erreicht werden, dass ein Verfahren zur Datenkommunikation zwischen einer Leitebene und einer Feldebene eines industriellen Systems bereitgestellt werden kann, das eine verbesserte Datenkommunikation gewährleisten kann, da eine Detektion und Korrektur von Daten von Feldgeräten der Feldebene durchgeführt werden können. Dies kann insbesondere im Zuge einer Datenabfrage durch Elemente der Leitebene in Form einer Dataquery vorgenommen werden. Hierdurch kann vermieden werden, dass Daten von Elementen der Feldebene, insbesondere Feldgeräten, mit unzureichender Datenqualität im Zuge der Datenabfrage an die Elemente der Leitebene weitergeleitet werden. Das erfindungsgemäße Verfahren ermöglicht somit im Zuge einer Datenabfrage, in Form einer Dataquery, durch Leitebenenanwendungen einer Leitebene eines industriellen System an Feldgeräte einer Feldebene, die Durchführung einer Qualitätskontrolle der auf die Datenabfrage bereitgestellten Antwortdaten der Feldgeräte und ggf. eine Korrektur von fehlerhaften Antwortdaten.
Ein industrielles System ist im Sinne der Anmeldung ein unternehmerischer Betriebskomplex mit wenigstens einer Feldebene, in der mittels entsprechenden Feldgeräten industrielle Prozesse durchgeführt werden, einer Datenebene bzw. Steuerungsebene, in der eine Steuerung der industriellen Prozesse basierend auf Mess- bzw. Steuerdaten der Feldgeräte der Feldebene durchgeführt wird, und einer Leitebene, in der Geschäftsprozesse und ökonomische Ausrichtungen des industriellen Systems entschieden werden. Ein industrielles System kann insbesondere durch ein Automatisierungssystem realisiert sein. Alternativ kann ein industrielles System durch eine industrielle Produktionsanlage oder durch einen industriellen Konzern mit einer Mehrzahl verschiedener industrieller Produktionsanlagen realisiert sein.

Das Erfindungsgemäße Verfahren kann während der Laufzeit beziehungsweise während des Betriebs des industriellen Systems ausgeführt werde. Insbesondere können die Überprüfung der Datenqualität der durch die Leitebenenanwendung abgefragten Antwortdaten der entsprechenden Feldgeräte sowie das Ausführen entsprechende Korrekturmaßnahmen gemäß dem erfindungsgemäßen Verfahren zur Laufzeit des industriellen Systems und somit während Betriebs der einzelnen Feldgeräte vorgenommen werden. Beispielsweise können für jede von der Leitebenenanwendung während des Betriebes des industriellen Systems an die entsprechenden Feldgeräte ausgesendete Datenabfrage die von den Feldgeräten ausgesendeten Antwortdaten auf Datenqualität überprüft und gegebenenfalls gemäß den Korrekturmaßnahmen korrigiert werden. Alternativ kann eine Überprüfung der Datenqualität und entsprechende Korrekturen stichprobenartig durchgeführt werden, sodass nur die Antwortdaten eines vorbestimmten Prozentsatzes an ausgesendeten Datenabfragen gemäß dem erfindungsgemäßen Verfahren auf Datenqualität untersucht werden. Alternativ können eine Überprüfung der Datenqualität der Antwortdaten und entsprechende Korrekturen ausschließlich während Betriebspausen, beispielsweise während Wartungsarbeiten des industriellen Systems oder Teilen des Systems durchgeführt werden.

Eine Leitebene kann im Sinne der Anmeldung eine Prozessleitebene, eine Betriebsleitebene und eine Unternehmensebene gemäß der Automatisierungspyramide umfassen.

Eine Leitebenenanwendung ist im Sinne der Anmeldung eine auf einer Datenverarbeitungsanlage der Leitebene ausgeführte Anwendung zur Datenverarbeitung.

Ein Feldgerät ist im Sinne der Anmeldung ein industrielles Gerät der Feldebene, das zur Steuerung des industriellen Prozesses beiträgt und wenigstens einen Sensor und/oder einen Aktor umfasst.

Antwortdaten sind im Sinne der Anmeldung Daten des Feldgeräts, die als Antwort auf eine Datenabfrage vom Feldgerät ausgesendet werden. Antwortdaten können Sensordaten bzw. Messdaten des Feldgeräts und Betriebsdaten, über die das Feldgerät charakterisiert sind, umfassen.

Nach einer Ausführungsform umfasst das Überprüfen der Datenqualität der Antwortdaten:
Abgleichen der Antwortdaten mit einem Regelsatz, wobei im Regelsatz Qualitätsanforderungen für Antwortdaten des Feldgeräts definiert sind, und wobei Antwortdaten des Feldgeräts, die von den im Regelsatz definierten Qualitätsanforderungen abweichen, als Antwortdaten unzureichender Qualität interpretiert werden.

Hierdurch kann der technische Vorteil erreicht werden, dass eine einfache Überprüfung der Datenqualität der Antwortdaten des Feldgeräts bereitgestellt werden kann. Über das Abgleichen der Antwortdaten mit einem Regelsatz und denen im Regelsatz definierten Qualitätsanforderungen, die für korrekte Antwortdaten des Feldgeräts zu erwarten sind, können fehlerhafte Antwortdaten mit unzureichender Qualität problemlos dadurch identifiziert werden, dass diese eine Abweichung von den im Regelsatz definierten Qualitätsanforderungen aufweisen.

Qualitätsanforderungen sind im Folgenden Eigenschaften, die Antwortdaten eines bestimmten Feldgeräts aufzuweisen haben. Qualitätsanforderungen können beispielsweise vorbestimmte Datenformate umfassen, in denen die Antwortdaten des Feldgeräts strukturiert sein müssen. Darüber hinaus können Qualitätsanforderungen Wertebereiche für Messwerte des Feldgeräts definieren. Qualitätsanforderungen können für einzelne Feldgeräte individuell angepasst und somit für das jeweilige Feldgerät das Datenformat festlegen, in dem die Antwortdaten zu strukturieren sind. Darüber hinaus kann die Qualitätsanforderung Wertebereiche für Messwerte des Feldgeräts festlegen, innerhalb derer die Messwerte der Antwortdaten angeordnet sein müssen.

Bei Abweichung von Antwortdaten eines Feldgeräts von wenigstens einem Merkmal der Qualitätsanforderungen des Regelsatzes werden die entsprechenden Antwortdaten als fehlerhaft klassifiziert.

Nach einer Ausführungsform umfassen die Antwortdaten Messdaten eines Sensorelements des Feldgeräts, und wobei über die Qualitätsanforderungen für Antwortdaten des Feldgeräts Datenformate und/oder Wertebereiche der Messdaten definiert sind.

Hierdurch kann der technische Vorteil erreicht werden, dass eine einfache und präzise Bestimmung der Datenqualität von Messdaten eines Feldgeräts bereitgestellt werden kann. Messdaten eines Feldgeräts, die beispielsweise das falsche Datenformat aufweisen oder nicht innerhalb eines in der Qualitätsanforderung fest definierten Wertebereichs angeordnet sind, können somit als fehlerhaft klassifiziert werden.

Nach einer Ausführungsform umfasst das Ausführen der Korrekturmaßnahme:
Auswählen einer geeigneten Korrekturmaßnahme aus einer Mehrzahl vordefinierter Korrekturmaßnahmen, wobei die Mehrzahl von Korrekturmaßnahmen mit dem Regelsatz für das Feldgerät verknüpft ist, und wobei für individuell definierte Abweichungen der Antwortdaten von den im Regelsatz definierten Qualitätsanforderungen individuell angepasste Korrekturmaßnahmen definiert sind.

Hierdurch kann der technische Vorteil erreicht werden, dass eine einfache Korrektur von fehlerhaften Antwortdaten bereitgestellt werden kann. Hierzu ist mit dem Regelsatz für das Feldgerät eine Mehrzahl verschiedener Korrekturmaßnahmen verknüpft. Zur Korrektur der fehlerhaften Antwortdaten kann somit eine geeignete Korrekturmaßnahme aus der Mehrzahl vordefinierter Korrekturmaßnahmen ausgewählt werden. Die einzelnen Korrekturmaßnahmen sind jeweils mit Qualitätsanforderungen des Regelsatzes verknüpft. Bei Abweichung von Antwortdaten von einer im Regelsatz vordefinierten Qualitätsanforderung kann somit die geeignete Korrekturmaßnahme durch die Verknüpfung mit der jeweiligen Qualitätsanforderung ermittelt werden. Somit sind für individuell definierte Abweichungen der Antwortdaten von vordefinierten Qualitätsanforderungen im Regelsatz individuell angepasste Korrekturmaßnahmen bereitgestellt.

Nach einer Ausführungsform sind der Regelsatz und/oder die Korrekturmaßnahmen auf das Feldgerät und/oder einen Typ des Feldgeräts und/oder einen Typ von Antwortdaten individuell angepasst.

Hierdurch kann der technische Vorteil erreicht werden, dass eine individuelle Anpassung der Überprüfung der Datenqualität der Antwortdaten auf individuelle Feldgeräte ermöglicht ist. Hierdurch kann eine präzise Identifizierung von fehlerhaften Antwortdaten unter Berücksichtigung des jeweiligen Feldgeräts bzw. eines Typs des jeweiligen Feldgeräts bzw. eines Typs der jeweiligen Antwortdaten erreicht werden. Für unterschiedliche Feldgeräte bzw. unterschiedliche Datentypen der Antwortdaten können somit verschiedene individuell angepasste Beurteilungskriterien der Datenqualität bereitgestellt werden. Hierdurch kann eine präzise Detektion von fehlerhaften Daten erreicht werden.

Nach einer Ausführungsform umfasst das Ausführen einer Korrekturmaßnahme:
Aussenden einer ersten Fehlermeldung durch das Datenkommunikationsmodul an das Feldgerät und Anfordern erneuter Antwortdaten; und/oder
Aussenden einer zweiten Fehlermeldung durch das Datenkommunikationsmodul an die Leitebenenanwendung, wobei die zweite Fehlermeldung eine fehlgeschlagene Datenkommunikation anzeigt.

Hierdurch kann der technische Vorteil erreicht werden, dass eine präzise Korrektur von fehlerhaften Antwortdaten bereitgestellt werden kann. Über das Aussenden einer Fehlermeldung an das Feldgerät und das Anfordern erneuter Antwortdaten, worauf das Feldgerät erneut Antwortdaten an das Datenmodul aussendet, die im Folgenden wiederum durch das Überprüfungsmodul überprüft werden, können vom Feldgerät Antwortdaten bezogen werden, die den Qualitätsanforderungen genügen, sprich den Qualitätsanforderungen des Regelsatzes entsprechen. Dies kann insbesondere bei Übertragungsfehlern der Antwortdaten bzw. beim Aussenden falscher Antwortdaten durch das Feldgerät eine wirksame Korrekturmaßnahme darstellen. Zusätzlich bzw. alternativ kann über das Aussenden einer weiteren Fehlermeldung an die Leitstandanwendung ein Fehler in der Datenabfrage der Daten des Feldgeräts mitgeteilt werden, sodass eine erneute Datenabfrage durch die Leitebenenanwendung vorgenommen werden kann.

Nach einer Ausführungsform umfasst das Ausführen einer Korrekturmaßnahme:
Ausführen einer Datenkorrektur der Antwortdaten und Generieren von korrigierten Antwortdaten durch das Überprüfungsmodul, wobei die korrigierten Antwortdaten den im Regelsatz definierten Qualitätsanforderungen entsprechen.

Hierdurch kann der technische Vorteil erreicht werden, dass eine präzise und verlässliche Korrektur von fehlerhaften Antwortdaten und das Bereitstellen korrekter Antwortdaten, die den vorgegebenen Qualitätsanforderungen entsprechen, erreicht werden kann. Hierzu können Datenkorrekturen der Antwortdaten ausgeführt und korrigierte Antwortdaten durch das Überprüfungsmodul generiert werden. Die durchzuführenden Datenkorrekturen können hierbei in den entsprechenden Korrekturmaßnahmen für eine erkannte Abweichung der Antwortdaten von den jeweils vordefinierten Qualitätsanforderungen des Regelsatzes definiert sein. Eine derartige vordefinierte Datenkorrektur kann beispielsweise vorsehen, einen fehlerhaften Messwert des Feldgeräts auf einen in der jeweiligen Korrekturmaßnahme vorbestimmten Wert zu korrigieren.

Nach einer Ausführungsform umfasst das Verfahren ferner: Ausführen einer Datenverarbeitung der Antwortdaten des Feldgeräts oder der korrigierten Antwortdaten des Feldgeräts und Generieren von verarbeiteten Antwortdaten durch das Datenkommunikationsmodul, wobei die Datenverarbeitung eine der Datenabfrage der Leitebenenanwendung entsprechende Änderung einer Komplexität und/oder eines Informationsgehalts der Antwortdaten des Feldgeräts umfasst.

Hierdurch kann der technische Vorteil erreicht werden, dass der Leitebenenanwendung verarbeitete Antwortdaten bereitgestellt werden können. Eine Datenverarbeitung kann hierbei eine Reduktion der Komplexität der Antwortdaten umfassen. Beispielsweise kann eine Datenmenge der Antwortdaten gemäß einer vorbestimmten Reduktionsprozedur reduziert werden. Alternativ bzw. zusätzlich kann ein Informationsgehalt der Antwortdaten verändert werden. Beispielsweise kann basierend auf den Messdaten des Feldgeräts ein entsprechender durch Datenabfrage angefragter Mittelwert errechnet werden. Alternativ hierzu kann eine beliebige Datenverarbeitung der Antwortdaten durchgeführt werden.

Das Ausführen der Datenverarbeitung der Antwortdaten kann während der Laufzeit des Systems ausgeführt werden. Es können entsprechend alle Antwortdaten der Feldgeräte auf entsprechende Datenabfragen verarbeitet werden. Alternativ können lediglich zuvor ausgewählte Antwortdaten verarbeitet werden. Nach einer Ausführungsform umfasst das Verfahren ferner: Übertragen der Antwortdaten oder der verarbeiteten Antwortdaten zureichender Datenqualität oder der korrigierten Antwortdaten durch das Datenkommunikationsmodul an die Leitebenenanwendung.

Hierdurch kann der technische Vorteil erreicht werden, dass eine Bereitstellung von korrekten Antwortdaten mit einer vorbestimmten Datenqualität der Leitebenenanwendung erreicht werden kann.

Das Übertragen der Antwortdaten kann während der Laufzeit des Systems ausgeführt werden.

Nach einer Ausführungsform umfasst das Verfahren ferner: Übersetzen der Datenabfrage in ein durch das Feldgerät interpretierbares Datenformat durch ein Übersetzungsmodul des Datenkommunikationsmoduls; und/oder
Übersetzen der Antwortdaten in ein durch die Leitebenenanwendung interpretierbares Datenformat durch das Übersetzungsmodul.

Hierdurch kann der technische Vorteil erreicht werden, dass eine präzise Datenkommunikation zwischen einem beliebigen Feldgerät der Feldebene und einer beliebigen Leitebenenanwendung der Leitebene erreicht werden kann. Dies kann durch entsprechende Übersetzungsprozesse der Antwortdaten bzw. der Datenabfrage erreicht werden, sodass eine Kommunikation zwischen Feldgeräten und Leitebenenanwendungen, die jeweils auf unterschiedlichen Sprachen bzw. Kommunikationsprotokollen kommunizieren, ermöglicht ist.

Nach einer Ausführungsform umfasst das Verfahren ferner: Abgleichen der Datenabfrage der Leitebenenanwendung mit einem vordefinierten Datenschema der Antwortdaten des Feldgeräts durch das Datenkommunikationsmodul; und/oder
Abgleichen der Antwortdaten des Feldgeräts mit dem vordefinierten Datenschema der Antwortdaten des Feldgeräts durch das Datenkommunikationsmodul, wobei das Datenschema für das Feldgerät definiert, welche Information des Feldgeräts über eine entsprechende Datenabfrage zugänglich ist; und Falls die Datenabfrage der Leitebenenanwendung oder die Antwortdaten des Feldgeräts nicht dem Datenschema entspricht, Senden einer Fehlermeldung durch das Datenkommunikationsmodul an die Leitebenenanwendung oder das Feldgerät, wobei die Fehlermeldung eine fehlerhafte Datenabfrage anzeigt.

Hierdurch kann der technische Vorteil erreicht werden, dass eine kontrollierte Datenkommunikation zwischen Leitebenenanwendungen und Feldgeräten des industriellen Systems ermöglicht ist. Über ein Datenschema, das für jedes Feldgerät individuell angepasst sein kann, kann ein Zugang zu Daten bzw. zu Information des jeweiligen Feldgeräts eingeschränkt sein. Ausschließlich Daten, die in dem jeweiligen Datenschema definiert sind, können somit durch entsprechende Datenabfragen von Leitebenenanwendungen eingesehen werden.

Nach einer Ausführungsform ist das Datenkommunikationsmodul auf einem externen Sever, insbesondere einem Cloud-Sever, oder auf einem mit dem Feldgerät unmittelbar verbundenen industriellen Edge-Gerät ausführbar.

Hierdurch kann der technische Vorteil erreicht werden, dass durch die Datenverarbeitung bzw. die Datenkorrektur der Antwortdaten weder die Funktionsweise des Feldgeräts noch die Funktionsweise der Leitebenenanwendung beeinträchtigt werden. Durch die Ausführung des Datenkommunikationsmoduls auf einem externen Server kann somit Rechenkapazität des Feldgeräts sowie der Leitebenenanwendung gespart werden. Ferner kann durch die Ausführung des Datenkommunikationsmoduls auf einem externen Server das Datenkommunikationsmodul für eine Mehrzahl von Feldgeräten ausgeführt werden. Durch eine Anwendung des Datenkommunikationsmoduls auf einem industriellen Edge-Gerät, das unmittelbar mit einem individuellen Feldgerät verbunden ist, kann ein Datenkommunikationsmodul für ein bestimmtes Feldgerät individuell ausgeführt werden. Durch die unmittelbare Anbindung des industriellen Edge-Geräts an das jeweilige Feldgerät kann somit eine für die Datenübertragung der Antwortdaten zwischen dem Feldgerät und dem Datenkommunikationsmodul zurückzulegende Distanz auf ein Minimum reduziert werden. Dies kann insbesondere bei großen Datenmengen der zu übertragenden Antwortdaten vorteilhaft sein.

Nach einer Ausführungsform ist das auf dem Cloud-Server ausgeführte Datenkommunikationsmodul mit einer Mehrzahl von Feldgeräten verbindbar, und wobei das Datenkommunikationsmodul für jedes verbundene Feldgerät individuell angepasste Regelsätze und entsprechende Korrekturmaßnahmen umfasst, wobei das Übersetzungsmodul eingerichtet ist, Datenabfragen in durch die Mehrzahl von Feldgeräten interpretierbare Datenformate zu übersetzen, und wobei das Übersetzungsmodul eingerichtet ist, Antwortdaten in durch von Mehrzahl Leitebenenanwendungen interpretierbare Datenformate zu übersetzen.

Hierdurch kann der technische Vorteil erreicht werden, dass eine Datenkommunikation zwischen einer Mehrzahl von Feldgeräten und ggf. einer Mehrzahl verschiedener Leitebenenanwendungen über die Ausführung des Datenkommunikationsmoduls auf einem entsprechenden Cloud-Server bereitgestellt werden kann. Das Datenkommunikationsmodul kann hierbei ausgebildet sein, eine Überprüfung der Antwortdaten, eine Korrektur fehlerhafter Antwortdaten, eine Verarbeitung der Antwortdaten bzw. eine Übersetzung der Antwortdaten bzw. der Datenabfragen für die Mehrzahl verschiedener Feldgeräte auszuführen.

Nach einer Ausführungsform ist eine Datenkommunikation zwischen der Leitebenenanwendung und dem Datenkommunikationsmodul und/oder zwischen dem Feldgerät und dem Datenkommunikationsmodul über Applikationsprogrammschnittstellen ausführbar.

Hierdurch kann der technische Vorteil erreicht werden, dass eine verlässliche Datenkommunikation zwischen der Leitebenenanwendung und dem Datenkommunikationsmodul bzw. zwischen dem Feldgerät und dem Datenkommunikationsmodul ermöglicht ist.

Nach einem zweiten Aspekt der Erfindung wird ein Computerprogrammprodukt bereitgestellt, umfassend Befehle, die bei der Ausführung des Programms durch einen Computer diesen veranlassen, das Verfahren gemäß einem der voranstehenden Ansprüche auszuführen.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele.

Hierbei zeigen jeweils
- FIG 1:: ein Flussdiagramm eines Verfahrens zur Datenkommunikation zwischen einer Leitebene und einer Feldebene in einem industriellen System gemäß einer Ausführungsform;
- FIG 2:: ein weiteres Flussdiagramm eines Verfahrens zur Datenkommunikation zwischen einer Leitebene und einer Feldebene in einem industriellen System gemäß einer weiteren Ausführungsform;
- FIG 3:: ein weiteres Flussdiagramm eines Verfahrens zur Datenkommunikation zwischen einer Leitebene und einer Feldebene in einem industriellen System gemäß einer weiteren Ausführungsform;
- FIG 4:: eine schematische Darstellung eines industriellen Systems gemäß einer weiteren Ausführungsform; und
- FIG 5:: eine schematische Darstellung eines Computerprogrammprodukts.

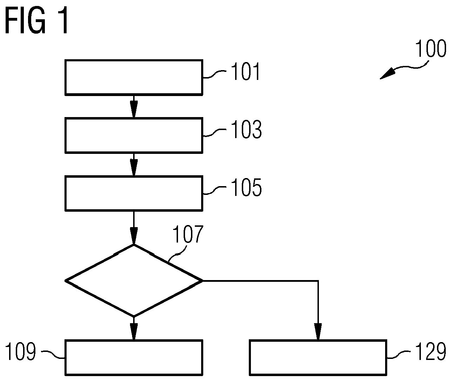

FIG 1 zeigt ein Flussdiagramm eines Verfahrens 100 zur Datenkommunikation zwischen einer Leitebene und einer Feldebene in einem industriellen System 200 gemäß einer Ausführungsform.

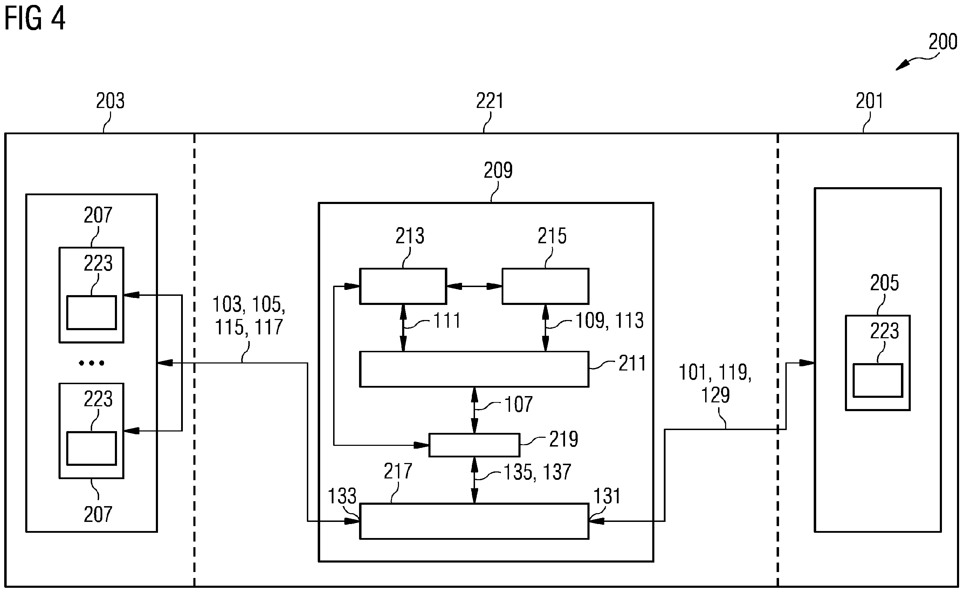

Die Beschreibung des Verfahrens 100 zur Datenkommunikation zwischen einer Leitebene 201 und einer Feldebene 203 eines industriellen Systems 200 zu den Figs.1 bis 3 wird in Bezug auf die Fig. 4 vorgenommen.

Das Verfahren 100 ist auf ein industrielles System 200 gemäß der in Fig. 4 dargestellten Ausführungsform anwendbar.

Ein industrielles System 200 umfasst hierbei wenigstens eine Leitebene 201 mit wenigstens einer Leitebenenanwendung 205, eine Feldebene 203 mit wenigstens einem Feldgerät 207 und einem Datenkommunikationsmodul 209. Das Datenkommunikationsmodul 209 ist sowohl mit der Leitebenenanwendung 205 der Leitebene 201 als auch dem Feldgerät 207 der Feldebene 203 verbunden, sodass eine Datenkommunikation zwischen der Leitebenenanwendung 205 und dem Datenkommunikationsmodul 209 bzw. zwischen dem Feldgerät 207 und dem Datenkommunikationsmodul 209 realisierbar ist. Eine Datenkommunikation kann hierbei über beliebige aus dem Stand der Technik bekannte Kommunikationsprotokolle realisiert sein.

Ein industrielles System 200 kann beispielsweise durch ein Automatisierungssystem realisiert sein, bei dem durch Ansteuerung der Feldgeräte ein Automatisierungsprozess gesteuert und ausgeführt werden kann. Ein Automatisierungsprozess bzw. ein industrieller Prozess kann beispielweise ein Fertigungsprozess, ein Transportprozess oder ein anders gearteter über Sensoren und Aktoren steuerbarer maschineller Prozess sein.

Ein Feldgerät 207 umfasst mindestens einen Sensor und/oder Aktor, der eingerichtet ist, Messdaten einer Messgröße aufzunehmen bzw. gemäß entsprechender Steuerungsdaten angesteuert zu werden.

Eine Leitebenenanwendung 205 kann eine Anwendung zur Datenverarbeitung sein, die auf einer Datenverarbeitungseinheit der Leitebene 201 ausgeführt wird und Daten des Feldgeräts 207 berücksichtigt bzw. verarbeitet.

In einem ersten Verfahrensschritt 101 empfängt das Datenkommunikationsmodul 209 eine Datenabfrage der Leitebenenanwendung 205. Eine Datenabfrage kann hierbei eine Abfragenachricht der Leitebenenanwendung 205 an das Feldgerät 207 in Form einer Dataquery sein, mit der Feldgerät 207 zum Aussenden entsprechender Antwortdaten aufgefordert wird.

In einem weiteren Verfahrensschritt 103 überträgt das Datenkommunikationsmodul 209 die Datenabfrage der Leitebenenanwendung 205 an das jeweils adressierte Feldgerät 207.

Basierend auf der Datenabfrage stellt das Feldgerät 207 darauffolgend entsprechende Antwortdaten bereit. Antwortdaten des Feldgeräts 207 können Messdaten bzw. Kenndaten des jeweiligen Feldgeräts 207 umfassen. Die Antwortdaten des Feldgeräts 207 können auf die jeweilige Datenabfrage angepasst sein, sodass ausschließlich die in der Datenabfrage angeforderten Daten in Form der Antwortdaten durch das Feldgerät 207 bereitgestellt werden.

In einem weiteren Verfahrensschritt 105 empfängt das Datenkommunikationsmodul 209 die Antwortdaten des Feldgeräts 207.

Darauffolgend werden die Antwortdaten des Feldgeräts in einem weiteren Verfahrensschritt 107 durch das Datenkommunikationsmodul hinsichtlich der Datenqualität der Antwortdaten überprüft. In der Überprüfung der Datenqualität kann berücksichtigt werden, ob die Antwortdaten des Feldgeräts den in der Datenabfrage angeforderten Daten entsprechen, sprich, ob das Feldgerät 207 die angeforderten Daten ausgesendet hat. Die Überprüfung der Datenqualität kann ferner eine Detektion von fehlerhaften Daten umfassen, die aufgrund von Übertragungsfehlern bzw. Fehlfunktionen des Feldgeräts 207 fehlerhaft sind. Darüber hinaus kann die Überprüfung der Datenqualität eine Überprüfung der tatsächlichen Werte der Antwortdaten umfassen. Insbesondere für den Fall, dass die Antwortdaten Messdaten des Feldgeräts 207 umfassen, kann bei der Überprüfung der Datenqualität berücksichtigt werden, ob die Messwerte innerhalb eines vorbestimmten Wertebereichs angeordnet sind. Bei einer Abweichung der Messwerte der Antwortdaten des Feldgeräts 207 von diesem vorbestimmten Wertebereich können die Messwerte während der Überprüfung der Datenqualität als fehlerhaft erkannt werden.

Falls bei der Überprüfung der Antwortdaten keine fehlerhaften Daten ermittelt werden und die Antwortdaten somit eine zureichende Datenqualität aufweisen, werden die Antwortdaten des Feldgeräts 107 in einem weiteren Verfahrensschritt 129 vom Datenkommunikationsmodul 209 an die jeweilige Leitebenenanwendung 205 übertragen.

Darauffolgend wird in einem weiteren Verfahrensschritt 109 durch das Überprüfungsmodul 211 eine Korrekturmaßnahme zum Korrigieren der fehlerhaften Antwortdaten ausgeführt, falls bei der Überprüfung eine unzureichende Datenqualität und damit verbunden fehlerhafte Antwortdaten ermittelt werden.

Gemäß einer Ausführungsform wird eine Datenkommunikation zwischen der Leitebenenanwendung 205 und dem Datenkommunikationsmodul 209 über eine Anwendungsprogrammierschnittstelle (API) ausgeführt. Eine Datenkommunikation zwischen dem Feldgerät 207 und dem Datenkommunikationsmodul 209 kann ebenfalls über eine Anwendungsprogrammierschnittstelle (API) ausgeführt werden.

Gemäß einer Ausführungsform kann das Datenkommunikationsmodul 209 auf einem Cloud-Server ausgeführt werden. Hierzu kann das Datenkommunikationsmodul 209 ferner ausgebildet sein, eine Datenkommunikation mit einer Mehrzahl verschiedener Feldgeräte 207 und/oder einer Mehrzahl verschiedener Leitebenenanwendungen 205 auszuführen. Ferner kann das Datenkommunikationsmodul 209 ausgebildet sein, über das Überprüfungsmodul 211 eine Überprüfung der jeweiligen Antwortdaten der verschiedenen Feldgeräte 207 auszuführen.

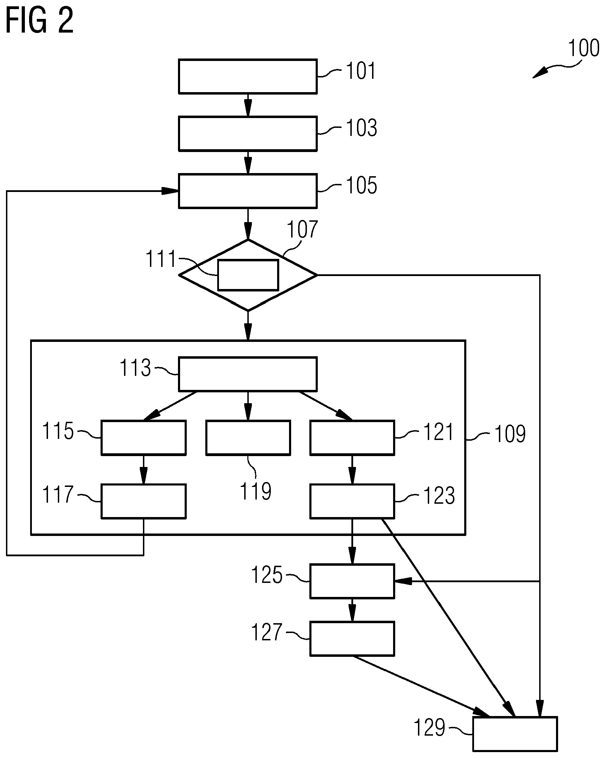

FIG 2 zeigt ein weiteres Flussdiagramm des Verfahrens 100 zur Datenkommunikation zwischen einer Leitebene 201und einer Feldebene 203 in einem industriellen System 200 gemäß einer weiteren Ausführungsform.

Die Ausführungsform des Verfahrens 100 in Fig. 2 basiert auf der Ausführungsform des Verfahrens 100 in Fig. 1 und umfasst alle dort beschriebenen Verfahrensschritte. Sollten diese in der folgenden Ausführungsform unverändert bleiben, wird von einer erneuten detaillierten Beschreibung abgesehen.

Gemäß der Ausführungsform in Fig. 2 umfasst der Verfahrensschritt 107 einen Verfahrensschritt 111, in dem zur Überprüfung der Datenqualität der Antwortdaten des Feldgeräts 207 die durch das Datenkommunikationsmodul 209 empfangenen Antwortdaten mit vordefinierten in einem Regelsatz gespeicherten Qualitätsanforderungen für Antwortdaten des jeweiligen Feldgeräts 207 verglichen werden. Antwortdaten, die den Qualitätsanforderungen des Regelsatzes 213 nicht genügen, werden im Folgenden als Antwortdaten unzureichender Qualität, sprich als fehlerhafte Antwortdaten, interpretiert.

Die Qualitätsanforderungen des Regelsatzes 213 können hierbei individuell auf das jeweilige Feldgerät 207 bzw. den jeweiligen Typ des Feldgeräts 207 bzw. an den Typ der Antwortdaten angepasst sein. Somit können die Qualitätsanforderungen individuell auf die jeweiligen Feldgeräte 207 abgestimmt sein, sodass sowohl der Typ des Feldgeräts als auch der jeweilige Anwendungsbereich des Feldgeräts 207 innerhalb des industriellen Systems 200 zur Beurteilung der Datenqualität der Antwortdaten berücksichtigt werden kann. So kann beispielsweise ein Einsatzbereich für einen Temperatursensor berücksichtigt werden, um beurteilen zu können, ob die Temperaturdaten des Sensors sinnvoll oder fehlerhaft sind. Dies kann insbesondere von dem jeweiligen Einsatzbereich des Sensors abhängen.

Über die Qualitätsanforderungen können beispielsweise Datenformate der Antwortdaten definiert werden, sodass Antwortdaten des Feldgeräts 207, die nicht den definierten Datenformaten entsprechen, als fehlerhaft identifiziert werden. Alternativ oder zusätzlich können über die Qualitätsanforderungen des Regelsatzes 213 Wertebereiche für Messwerte des Feldgeräts 207 definiert werden, sodass Antwortdaten bzw. Messwerte, die außerhalb des definierten Wertebereichs liegen, als fehlerhafte Antwortdaten evaluiert werden. Neben Wertebereichen können in den entsprechenden Qualitätsanforderungen auch einzelne Werte festgelegt werden, die beispielsweise bestimmte Messwerte des Feldgeräts 207 anzunehmen haben.

Nach Abgleich der vom Datenkommunikationsmodul 209 empfangenen Antwortdaten mit den Qualitätsanforderungen des Regelsatzes 213, können Antwortdaten, die den Qualitätsanforderungen des Regelsatzes 213 nicht genügen, als fehlerhafte Antwortdaten unzureichender Qualität ermittelt werden. Antwortdaten, die den Qualitätsanforderungen des Regelsatzes 213 genügen, werden hingegen als korrekte Antwortdaten mit zureichender Qualität klassifiziert.

In der Ausführungsform in Fig. 2 umfasst der Verfahrensschritt 109 ferner einen Verfahrensschritt 113, in dem durch das Überprüfungsmodul 211 aus einer Mehrzahl vordefinierter Korrekturmaßnahmen eine geeignete Korrekturmaßnahme zur Korrektur der im Verfahrensschritt 107 als fehlerhaft ermittelten Antwortdaten ausgewählt wird. Die vordefinierten Korrekturmaßnahmen können hierbei mit dem Regelsatz 213 für das jeweilige Feldgerät 207 derart verknüpft sein, dass für die einzelnen im Regelsatz 213 definierten Qualitätsanforderungen und insbesondere für Abweichungen zu diesen individuell definierten Qualitätsanforderungen geeignete Korrekturmaßnahmen definiert sind. Für jede Qualitätsanforderung des Regelsatzes 213 ist somit mindestens eine Korrekturmaßnahme definiert, die geeignet ist, eine Abweichung der Antwortdaten von der jeweiligen Qualitätsanforderung zu korrigieren.

Analog zu den Qualitätsanforderungen können die jeweiligen Korrekturmaßnahmen ebenfalls individuell an das jeweilige Feldgerät 207, an einen Typ des Feldgeräts bzw. an einen Typ der jeweiligen Antwortdaten angepasst sein. Für verschiedene Feldgeräte 207 des industriellen Systems 200 können somit unterschiedliche und individuell angepasste Qualitätsanforderungen definiert werden, die die jeweiligen Antwortdaten des Feldgeräts 207 für eine wirksame Datenkommunikation erfüllen müssen. Darüber hinaus können für jedes Feldgerät individuell entsprechende Korrekturmaßnahmen definiert werden, sodass verschiedene Feldgeräte des industriellen Systems vorgesehen sein können.

Die Korrekturmaßnahmen können beispielsweise das Aussenden einer Fehlermeldung oder das Korrigieren eines fehlerhaften Werts der Antwortdaten auf einen vordefinierten Wert umfassen.

In Abhängigkeit der jeweils detektierten Abweichungen der Antwortdaten von den vordefinierten Qualitätsanforderungen durch das Überprüfungsmodul 211 kann beispielsweise in einem folgenden Verfahrensschritt 115 eine Fehlermeldung durch das Datenkommunikationsmodul 209 an das Feldgerät 207 ausgesendet werden und in einem Verfahrensschritt 117 erneut Antwortdaten vom Feldgerät 207 angefordert werden.

Darauffolgend kann das Feldgerät 207 entsprechend erneut Antwortdaten an das Datenkommunikationsmodul aussenden, die vom Datenkommunikationsmodul 209 im Verfahrensschritt 105 empfangen werden. Die erneut ausgesendeten und vom Datenkommunikationsmodul 209 empfangenen Antwortdaten können im Folgenden erneut durch das Überprüfungsmodul im Verfahrensschritt 107 überprüft werden. Sollten diese Antwortdaten im Überprüfungsschritt 107 als korrekt identifiziert werden, kann im Verfahrensschritt 129 durch das Datenkommunikationsmodul 209 ein entsprechendes Aussenden der Antwortdaten an die Leitebenenanwendung 205 vorgenommen werden. Bei einer erneuten Detektion von fehlerhaften Antwortdaten können wiederum im Verfahrensschritt 109 entsprechende Korrekturmaßnahmen durchgeführt werden.

Alternativ kann zur Korrektur der fehlerhaften Antwortdaten in einem Verfahrensschritt 119 eine weitere Fehlermeldung durch das Datenkommunikationsmodul 209 an die Leitebenenanwendung 205 ausgesendet werden. Hierdurch wird der Leitebenenanwendung eine fehlerhafte Datenkommunikation angezeigt. Hierauf kann durch die Leitebenenanwendung 205 eine erneute Datenabfrage an das Feldgerät 207 bzw. das Datenkommunikationsmodul 209 aussenden und eine erneute Datenkommunikation initiieren.

Alternativ kann zur Korrektur der fehlerhaften Antwortdaten in einem Verfahrensschritt 121 durch das Überprüfungsmodul 211 eine Datenkorrektur der Antwortdaten des Feldgeräts 207 durchgeführt und in einem weiteren Verfahrensschritt 123 korrigierte Antwortdaten generiert werden.

Eine Datenkorrektur der fehlerhaften Antwortdaten kann vorsehen, fehlerhafte Werte der Antwortdaten bzw. Werte, die außerhalb eines vorbestimmten Wertebereichs angeordnet sind und von einem vorbestimmten Wert abweichen, auf einen vorbestimmten Ersatzwert, beispielsweise den Zahlenwert 0, zu korrigieren. Die im Verfahrensschritt 123 korrigierten Antwortdaten entsprechen logischerweise den im Regelsatz 213 definierten Qualitätsanforderungen und weisen somit eine zureichende Datenqualität auf.

Ferner weist das Verfahren 100 in der in Fig. 2 gezeigten Ausführungsform einen Verfahrensschritt 125 auf, in dem durch das Datenkommunikationsmodul 209 eine Datenverarbeitung sowohl der im Verfahrensschritt 123 korrigierten Antwortdaten als auch der im Verfahrensschritt 107 als korrekt und den Qualitätsanforderungen entsprechenden Antwortdaten ausgeführt wird. Eine Datenverarbeitung kann beispielsweise eine Reduktion der Datenmenge der Antwortdaten umfassen. Alternativ können Datenverarbeitungsprozesse ausgeführt werden, mittels denen ein Informationsgehalt der Antwortdaten verändert wird. Beispielsweise können Messwerte der Antwortdaten in einem Mittelwert zusammengefasst werden. Darüber hinaus können beliebige, aus dem Stand der Technik bekannte, Verfahren zur Messwertauswertung ausgeführt werden.

In einem folgenden Verfahrensschritt 127 werden entsprechende verarbeitete Antwortdaten generiert. Die Datenverarbeitung bzw. die hierauf basierend generierten verarbeiteten Antwortdaten entsprechen den in der Datenabfrage der Leitebenenanwendung angeforderten Antwortdaten des Feldgeräts 207.

Je nach Datenabfrage der Leitebenenanwendung 205 können die im Verfahrensschritt 107 als korrekte Antwortdaten bzw. die im Verfahrensschritt 123 generierten korrigierten Antwortdaten zunächst der Datenverarbeitung im Verfahrensschritt 125 und somit in Form von generierten verarbeiteten Antwortdaten im Verfahrensschritt 129 an die Leitebenenanwendung 205 übertragen werden. Alternativ können die im Verfahrensschritt 123 generierten korrigierten Antwortdaten ohne eine zusätzliche Datenverarbeitung im Verfahrensschritt 129 an die Leitebenenanwendung 205 übertragen werden.

**Tab. 1**

| **Regelsatz ID** | **Qualitätsanforderung** | **Beschreibung** |
|---|---|---|
| R1.1 | Wert > 0 | Wert muss positiv sein |
| R1.2 | Wert!=0 | Wert darf nicht negativ sein |
| R1.3 | Wert > 0 && Wert < 60 | Zulässiger Wert muss zwischen 0 und 60 sein |
| R1.4 | Wert > 60 | Wert darf nicht größer 60 sein |

Tabelle 1 zeigt ein Beispiel für einen Regelsatz 213 und darin definierte Qualitätsanforderungen für Antwortdaten eines Feldgeräts 207.

In Tabelle 1 sind vier verschiedene Qualitätsanforderungen definiert, denen jeweils eine Identifikationsnummer R1.1 bis R1.4 zugeordnet ist. Die erste Qualitätsanforderung R1.1 definiert, dass ein Wert der Antwortdaten größer 0 sein muss. Die zweite Qualitätsanforderung R1.2 definiert, dass ein Wert der Antwortdaten nicht negativ sein darf. Die dritte Qualitätsanforderung R1.3 definiert, dass ein Wert der Antwortdaten einen Zahlenwert zwischen 0 und 16 annehmen muss. Die vierte Qualitätsanforderung R1.4 definiert, dass ein Wert der Antwortdaten nicht größer 60 sein darf. Darüber hinaus umfasst die Tabelle 1 jeweils Beschreibungen der einzelnen Qualitätsanforderungen.

Die in Tabelle 1 beschriebenen Werte der Antwortdaten können beispielsweise Messwerte eines Sensorelements des Feldgeräts 207 betreffen. Die in Tabelle 1 dargestellten Qualitätsanforderungen sind jedoch lediglich beispielhaft und sollen keinen realen Anwendungsfall beschreiben. Die in den Qualitätsanforderungen beschriebenen Werte können den gleichen Wert der Antwortdaten beschreiben. Alternativ können durch die in den Qualitätsanforderungen definierten Werte unterschiedliche Werte der Antwortdaten beschrieben sein.

**Tab. 2**

| **Regelsatz ID** | **Korrekturmaßnahmen ID** | **Abweichung** | **Korrekturmaßnahme** | **Beschreibung** |
|---|---|---|---|---|
| R1.1 | M1.1 | Wert > 0 | **Ausgabe** Wert = 0 | Falls Wert negativ, Setze Wert auf 0 |
| R1.2 | M1.2 | Wert != 0 | **Ausgabe** "Wert darf nicht gleich 0 sein." | Falls Wert==0, Ausgeben "Wert darf nicht gleich 0 sein" |
| R1.3 | M1.3 | Wert > 0 && Wert < 60 | **Ausgabe** Wert = null | Falls Wert größer als 150, Wert sollte von der Ergebnisliste ausgeschlossen sein |
| R1.4 | M1.4 | Wert > 60 | **Ausgabe** Fehlermeldung | Falls Wert größer als 60, Ausgeben einer Fehlermeldung |

In Tabelle 2 sind zusätzlich zu den in Tabelle 1 definierten Qualitätsanforderungen entsprechende Korrekturmaßnahmen angeführt. Jeder Qualitätsanforderung der Tabelle 1 ist hierbei eine entsprechende Korrekturmaßnahme zugeordnet, sodass bei Abweichung der Antwortdaten des Feldgeräts 207 eine im Regelsatz definierte Qualitätsanforderung einer individuell angepassten Korrekturmaßnahme zugeordnet wird.

Bei einer Abweichung der Antwortdaten von der Qualitätsanforderung R1.1, sprich, bei einem negativen Wert, wird somit die Korrekturmaßnahme M1.1 ausgeführt und der jeweilige Wert auf den Zahlenwert 0 gesetzt. Bei einer Abweichung der Antwortdaten von der Qualitätsanforderung R1.2, sprich, wenn ein Wert der Antwortdaten den Zahlenwert 0 annimmt, wird die Korrekturmaßnahme M1.2 ausgeführt und eine Fehlermeldung ausgegeben, dass der jeweilige Wert nicht den Zahlenwert 0 annehmen darf. Bei einer Abweichung der Antwortdaten von der Qualitätsanforderung R1.3, sprich bei einem Wert der Antwortdaten der nicht zwischen 0 und 60 angeordnet ist, wird die Korrekturmaßnahme M1.3 ausgeführt und der jeweilige Wert aus der Ergebnisliste ausgeschlossen und auf null gesetzt. Bei einer Abweichung der Antwortdaten von der Qualitätsanforderung R1.4, sprich, bei einem Wert der Antwortdaten größer als 60, wird die Korrekturmaßnahme M1.4 ausgeführt und ebenfalls eine Fehlermeldung ausgegeben.

Der Regelsatz 213 kann als eine Datei, eine Datenbank oder ein Datenrepository ausgebildet sein. Das Überprüfungsmodul 211 ist dabei eingerichtet, die Datei, die Datenbank bzw. das Data-Repository des Regelsatzes 213 einzulesen.

Die Qualitätsanforderungen des Regelsatzes 213 und die Korrekturmaßnahmen weisen jeweils individuelle Identifikationen (ID) auf, über die eine eindeutige Zuordnung einer Korrekturmaßnahme zu einer bestimmten Qualitätsanforderung gegeben ist. Für jede Abweichung der Antwortdaten von einer bestimmten Qualitätsanforderung des Regelsatzes 213 ist somit eindeutig eine auszuführende Korrekturmaßnahme definiert, über die entsprechende Abweichungen korrigiert werden können. Korrekturmaßnahmen können neben dem Aussenden von Fehlermeldungen bzw. dem Setzen von Werten der Antwortdaten auf vorbestimmte Zahlenwerte das Verfassen von Log-Einträgen umfassen.

Die in den Tabellen 1 und 2 dargestellten Qualitätsanforderungen bzw. Korrekturmaßnahmen sind lediglich beispielhaft und sollen die vorliegende Erfindung nicht beschränken. In Tabellen 1 und 2 ist hingegen beispielhaft dargestellt, wie für Antwortdaten eines Feldgeräts 207 Qualitätsanforderungen und damit verbundene Korrekturmaßnahmen vordefiniert werden können, anhand derer eine Beurteilung der Datenqualität der entsprechenden Antwortdaten ausgeführt und entsprechende Korrekturen fehlerhafter Antwortdaten durchgeführt werden können.

Je nach Ausbildung des Feldgeräts 207 bzw. der jeweiligen Anwendung des Feldgeräts bzw. der entsprechenden Antwortdaten können unterschiedliche Qualitätsanforderungen und Korrekturmaßnahmen vorgesehen werden.

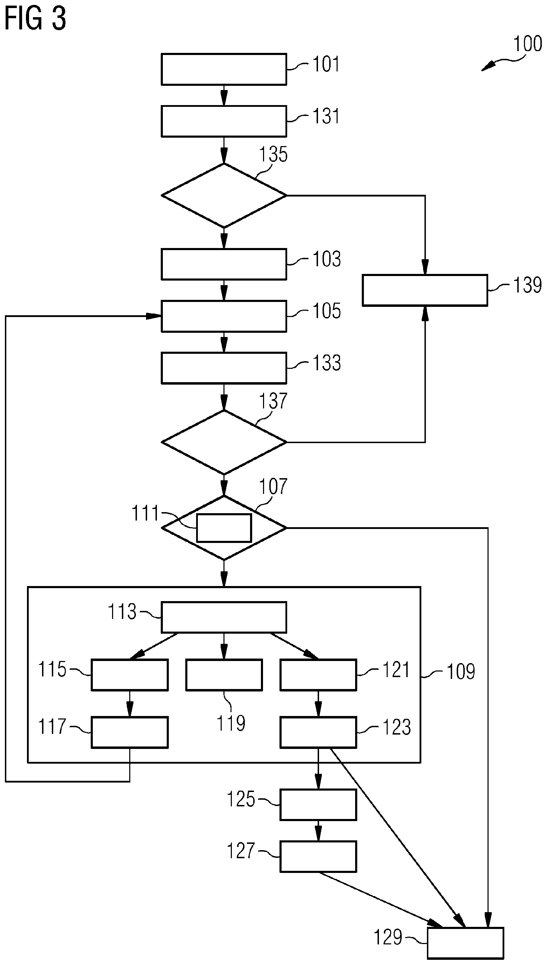

FIG 3 zeigt ein weiteres Flussdiagramm des Verfahrens zur Datenkommunikation zwischen einer Leitebene und einer Feldebene in einem industriellen System 200 gemäß einer weiteren Ausführungsform.

Die Ausführungsform des Verfahrens 100 in Fig. 3 basiert auf der Ausführungsform in Fig. 2 und umfasst alle dort beschriebenen Verfahrensschritte. Sofern diese in der Ausführungsform in Fig. 3 unverändert bleiben, wird von einer erneuten detaillierten Beschreibung abgesehen.

Abweichend zu der Ausführungsform in Fig. 2 umfasst das Verfahren 100 in der Ausführungsform in Fig. 3 einen Verfahrensschritt 131. Im Verfahrensschritt 131 wird durch ein Übersetzungsmodul 217 des Datenkommunikationsmoduls 209 eine Übersetzung der Datenabfrage der Leitebenenanwendung 205 in ein durch das Feldgerät 207 interpretierbares Datenformat ausgeführt.

Darüber hinaus umfasst das Verfahren 100 einen Verfahrensschritt 133, in dem durch das Übersetzungsmodul 217 Antwortdaten des Feldgeräts 207 in ein durch die Leitebenenanwendung 205 interpretierbares Datenformat übersetzt werden.

Die Feldgeräte 207 und die Leitebenenanwendungen 205 können somit in unterschiedlichen Kommunikationsprotokollen kommunizieren. Über das Übersetzungsmodul 217 kann eine entsprechende Übersetzung der Antwortdaten bzw. der Datenabfragen vorgenommen werden, sodass trotz unterschiedlicher Kommunikationsprotokolle eine Datenkommunikation zwischen den Leitebenenanwendungen 205 und den Feldgeräten 207 des industriellen Systems 200 gewährleistet werden kann.

Ferner umfasst das Verfahren 100 einen Verfahrensschritt 135. Im Verfahrensschritt 135 werden Datenabfragen der Leitebenenanwendung 205 durch das Datenkommunikationsmodul 209 mit einem vordefinierten Datenschema 219 abgeglichen.

In einem Verfahrensschritt 137 werden Antwortdaten des Feldgeräts 207 durch das Datenkommunikationsmodul 209 ebenfalls mit dem vordefinierten Datenschema 219 abgeglichen.

Falls die Datenabfragen der Leitebenenanwendung 205 und/oder die entsprechenden Antwortdaten des Feldgeräts 207 nicht dem vorbestimmten Datenschema entsprechen, werden in einem Verfahrensschritt 139 Fehlermeldungen an die Leitebenenanwendung 205 bzw. an das Feldgerät 207 ausgesendet, wodurch eine fehlgeschlagene Datenkommunikation angezeigt wird.

Ein Datenschema kann individuell an ein jeweiliges Feldgerät 207 angepasst sein und definieren, auf welche Daten des Feldgeräts eine Leitebenenanwendung 205 mit einer entsprechenden Datenabfrage in Form einer Dataquery zugreifen kann. Darüber hinaus können im Datenschema Datenformate für die Antwortdaten definiert sein, die vorbestimmen, in welchem Format die vom Feldgerät 207 bereitgestellte Information von diesem an die jeweilige Leitebenenanwendung 205 auszusenden ist. Darüber hinaus können im Datenschema Kommunikationsbefehle definiert sein, über die die Leitebenenanwendung 205 mit einer entsprechend ausgestalteten Datenabfrage auf Daten des Feldgeräts 207 zugreifen kann.

Gemäß einer Ausführungsform umfasst das Feldgerät 207 und/oder die Leitebenenanwendung 205 eine entsprechend ausgestaltete Anwendungsprogrammierschnittstelle (API). Über die jeweilige Anwendungsprogrammierschnittstelle (API) kann das Datenschema definiert sein, wodurch die durch eine entsprechende Dataquery Anfrage der Leitebenenanwendung 205 zugängliche Information des Feldgeräts 207 definiert ist. Darüber hinaus kann über die Ausgestaltung der Anwendungsprogrammierschnittstelle (API) sowohl das Format der Datenabfrage definieren als auch das Format der jeweils durch das Feldgerät 207 zur Verfügung gestellten Information.

FIG 4 zeigt eine schematische Darstellung eines industriellen Systems 200 gemäß einer weiteren Ausführungsform.

Fig. 4 zeigt eine Ausführungsform des industriellen Systems 200 mit einer Leitebene 201, einer Feldebene 203 und einem Datenmodul 209. In der gezeigten Ausführungsform umfasst die Leitebene 201 eine Leitebenenanwendung 205, die jeweils eine Anwendungsprogrammierschnittstelle (API) 223 umfasst. Die Feldebene 203 weist zwei Feldgeräte 207 auf, die jeweils ebenfalls eine Anwendungsprogrammierschnittstelle (API) 223 umfassen.

Alternativ zu der hier gezeigten Ausführungsform kann die Leitebene 201 eine beliebige Anzahl verschiedener Leitebenenanwendungen 205 aufweisen. Zusätzlich bzw. alternativ kann die Feldebene 203 eine beliebige Anzahl verschiedener Feldgeräte 207 umfassen.

In der gezeigten Ausführungsform wird das Datenkommunikationsmodul 209 auf einem externen Server 221, insbesondere einem Cloud-Server, ausgeführt. Alternativ hierzu kann das Datenkommunikationsmodul auch auf einem industriellen Edge-Gerät ausgeführt werden, das unmittelbar mit einem Feldgerät 207 verbunden ist.

Das Datenkommunikationsmodul 209 umfasst ein Überprüfungsmodul 211 zum Durchführen der Überprüfung der Datenqualität der Antwortdaten der Feldgeräte 207 und zum Ausführen der Korrekturmaßnahmen zum Korrigieren fehlerhafter Antwortdaten gemäß den oben beschriebenen Verfahrensschritten. Darüber hinaus umfasst das Datenkommunikationsmodul 209 einen Regelsatz 213 und eine Datenbank 215 für Korrekturmaßnahmen, in denen gemäß dem oben Beschriebenen vordefinierte Qualitätsanforderungen für die jeweiligen Antwortdaten der Feldgeräte 207 bzw. entsprechende Korrekturmaßnahmen angeordnet sind. In der gezeigten Ausführungsform sind für die zwei dargestellten Feldgeräte 207 gemeinsame Regelsätze 213 bzw. in der Datenbank 215 gespeicherte Korrekturmaßnahmen vorgesehen. Alternativ hierzu können für jedes einzelne Feldgerät 207 individuell angepasste Regelsätze und die darin definierten Qualitätsanforderungen sowie entsprechend an diese angepasste Korrekturmaßnahmen vorgesehen sein.

Ferner umfasst das Datenkommunikationsmodul 209 ein Übersetzungsmodul 217 zum Übersetzen der Datenabfragen der Leitebenenanwendungen 205 und der Antwortdaten der Feldgeräte 207 gemäß den oben beschriebenen Übersetzungsvorgängen. Ferner weist das Datenkommunikationsmodul 209 ein Datenschema 219 auf, über das eine Datenkommunikation zwischen der Leitebenenanwendung 205 und den jeweiligen Feldgeräten 207 definiert ist.

Zur Datenkommunikation wird zunächst von der Leitebenenanwendung 205 eine entsprechende Datenabfrage an das Datenkommunikationsmodul 209 ausgesendet. Die Datenabfrage wird gemäß dem Verfahrensschritt 131 durch das Übersetzungsmodul 217 in ein durch das Feldgerät 207 interpretierbares Datenformat übersetzt. Gemäß den Verfahrensschritten 135, 137 wird die Datenabfrage mit dem Datenschema 219 abgeglichen. Stimmt die Datenabfrage mit dem vorbestimmten Datenschema überein, wird die Datenabfrage vom Datenkommunikationsmodul 209 gemäß dem Verfahrensschritt 103 an das jeweils adressierte Feldgerät 207 ausgesendet. Hierauf generiert das adressierte Feldgerät 207 entsprechende Antwortdaten und sendet diese an das Datenkommunikationsmodul 209 aus, worauf das Datenkommunikationsmodul 209 gemäß dem Verfahrensschritt 105 die ausgesendeten Antwortdaten empfängt. Gemäß dem Verfahrensschritt 133 werden die empfangenen Antwortdaten durch das Übersetzungsmodul 217 in ein von der Leitebenenanwendung 205 interpretierbares Datenformat übersetzt. Gemäß den Verfahrensschritten 135, 137 werden die ausgesendeten Antwortdaten des Feldgeräts 207 mit dem vordefinierten Datenschema abgeglichen. Stimmen die Antwortdaten mit dem vordefinierten Datenschema 219 überein, wird eine Überprüfung gemäß dem Verfahrensschritt 107 durch das Überprüfungsmodul 211 der Antwortdaten ausgeführt. Hierzu werden die Antwortdaten durch das Überprüfungsmodul 211 gemäß dem Verfahrensschritt 111 mit den vordefinierten Qualitätsanforderungen des Regelsatzes 213 abgeglichen. Entsprechen die Antwortdaten des Feldgeräts 207 den Qualitätsanforderungen des Regelsatzes 213, werden diese vom Datenkommunikationsmodul 209 gemäß dem Verfahrensschritt 129 an die Leitebenenanwendung 205 ausgesendet. Wird durch das Überprüfungsmodul 211 eine Abweichung der Antwortdaten von den Qualitätsanforderungen des Regelsatzes 213 ermittelt, so wird eine geeignete Korrekturmaßnahme aus der Datenbank 215 der Korrekturmaßnahmen gemäß den Verfahrensschritten 109, 113 ausgewählt und die entsprechende Korrekturmaßnahme ausgeführt, um die fehlerhaften Antwortdaten zu korrigieren. Gemäß den oben beschriebenen Ausführungsformen kann hierzu eine entsprechende Fehlermeldung sowohl an das Feldgerät 207 als auch an die Leitebenenanwendung 205 ausgesendet werden. Alternativ können entsprechende Datenkorrekturen gemäß dem Verfahrensschritt 121 ausgeführt und korrigierte Antwortdaten gemäß dem Verfahrensschritt 123 generiert werden. Diese können darauffolgend gemäß dem Verfahrensschritt 129 durch das Datenkommunikationsmodul 209 an die Leitebenenanwendung 205 ausgesendet werden. In der Ausführungsform in Fig. 4 nicht dargestellt, kann das Datenkommunikationsmodul 209 wie oben beschrieben zusätzlich eine Datenverarbeitung der Antwortdaten ausführen und gemäß den Verfahrensschritten 125, 127 verarbeitete Antwortdaten generieren, die ebenfalls gemäß dem Verfahrensschritt 129 an die Leitebenenanwendung 205 ausgesendet werden können.

Gemäß einer Ausführungsform kann das Datenkommunikationsmodul gemäß der Open-Source-Datenabfrage und Manipulationssprache GraphQL ausgestaltet sein. Die Anwendungsprogrammierschnittstellen (API) können dabei ebenfalls gemäß der Datenabfrage und Manipulationssprache GraphQL ausgestaltet sein.

Der Regelsatz 213 kann als eine Datei, eine Datenbank oder ein Datenrepository ausgebildet sein. Das Überprüfungsmodul 211 ist dabei eingerichtet, die Datei, die Datenbank bzw. das Data-Repository des Regelsatzes 213 einzulesen.

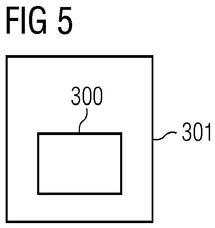

FIG 5 zeigt eine schematische Darstellung eines Computerprogrammprodukts.

Das Computerprogrammprodukt 300 ist auf einem Speichermedium 301 angeordnet. Das Speichermedium 301 kann beispielsweise eine Festplatte einer Datenverarbeitungsanlage, eine externe Festplatte oder ein anderes aus dem Stand der Technik bekanntes Speichermedium sein.

Obwohl die Erfindung im Detail durch die genannten Ausführungsformen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zur Datenkommunikation zwischen einer Leitebene (201) und einer Feldebene (203) eines industriellen Systems (200), umfassend:
Empfangen (101) einer Datenabfrage einer Leitebenenanwendung (205) der Leitebene (201) an ein Feldgerät (207) der Feldebene (203) durch ein Datenkommunikationsmodul (209);
Übertragen (103) der Datenabfrage der Leitebenenanwendung (205) durch das Datenkommunikationsmodul (209) an das Feldgerät (207);
Empfangen (105) von Antwortdaten des Feldgeräts (207) auf die Datenabfrage durch das Datenkommunikationsmodul (209);
Überprüfen (107) einer Datenqualität der Antwortdaten durch ein Überprüfungsmodul (211) des Datenkommunikationsmoduls (209); und
Falls bei der Überprüfung eine unzureichende Datenqualität ermittelt wird, Ausführen (109) einer Korrekturmaßnahme durch das Überprüfungsmodul (211) zum Korrigieren der fehlerhaften Antwortdaten.

2. Verfahren (100) nach Anspruch 1, wobei das Überprüfen (107) der Datenqualität der Antwortdaten umfasst:
Abgleichen (111) der Antwortdaten mit einem Regelsatz (213) durch das Überprüfungsmodul (211), wobei im Regelsatz (213) Qualitätsanforderungen für Antwortdaten des Feldgeräts (207) definiert sind, und wobei Antwortdaten des Feldgeräts (207), die von den im Regelsatz (213) definierten Qualitätsanforderungen abweichen, als Antwortdaten unzureichender Qualität interpretiert werden.

3. Verfahren (100) nach Anspruch 2, wobei die Antwortdaten Messdaten eines Sensorelements des Feldgeräts (207) umfassen, und wobei über die Qualitätsanforderungen für Antwortdaten des Feldgeräts (207) Datenformate und/oder Wertebereiche der Messdaten definiert sind.

4. Verfahren (100) nach Anspruch 1, 2 oder 3, wobei das Ausführen (109) der Korrekturmaßnahme umfasst:
Auswählen (113) einer geeigneten Korrekturmaßnahme aus einer Mehrzahl vordefinierter Korrekturmaßnahmen durch das Überprüfungsmodul (211), wobei die Mehrzahl von Korrekturmaßnahmen mit dem Regelsatz (213) für das Feldgerät (207) verknüpft ist, und wobei für individuell definierte Abweichungen der Antwortdaten von den im Regelsatz (213) definierten Qualitätsanforderungen individuell angepasste Korrekturmaßnahmen definiert sind.

5. Verfahren (100) nach Anspruch 2, 3 oder 4, wobei der Regelsatz (213) und/oder die Korrekturmaßnahmen auf das Feldgerät (207) und/oder einen Typ des Feldgeräts (207) und/oder einen Typ von Antwortdaten individuell angepasst sind.

6. Verfahren (100) nach einem der voranstehenden Ansprüche, wobei das Ausführen (109) einer Korrekturmaßnahme umfasst:
Aussenden (115) einer ersten Fehlermeldung durch das Datenkommunikationsmodul (209) an das Feldgerät (207) und Anfordern (117) erneuter Antwortdaten; und/oder
Aussenden (119) einer zweiten Fehlermeldung durch das Datenkommunikationsmodul (209) an die Leitebenenanwendung (205),
wobei die zweite Fehlermeldung eine fehlgeschlagene Datenkommunikation anzeigt.

7. Verfahren (100) nach einem der voranstehenden Ansprüche, wobei das Ausführen (109) einer Korrekturmaßnahme umfasst: Ausführen (121) einer Datenkorrektur der Antwortdaten und Generieren (123) von korrigierten Antwortdaten durch das Überprüfungsmodul (211), wobei die korrigierten Antwortdaten den im Regelsatz (213) definierten Qualitätsanforderungen entsprechen.

8. Verfahren (100) nach einem der voranstehenden Ansprüche, ferner umfassend:
Ausführen (125) einer Datenverarbeitung der Antwortdaten des Feldgeräts (207) oder der korrigierten Antwortdaten des Feldgeräts (207) und Generieren (127) von verarbeiteten Antwortdaten durch das Datenkommunikationsmodul (209), wobei die Datenverarbeitung eine der Datenabfrage der Leitebenenanwendung (205) entsprechende Änderung einer Komplexität und/oder eines Informationsgehalts der Antwortdaten des Feldgeräts (207) umfasst.

9. Verfahren (100) nach einem der voranstehenden Ansprüche, ferner umfassend:
Übertragen (129) der Antwortdaten oder der verarbeiteten Antwortdaten zureichender Datenqualität oder der korrigierten Antwortdaten durch das Datenkommunikationsmodul (209) an die Leitebenenanwendung (205).

10. Verfahren (100) nach einem der voranstehenden Ansprüche, ferner umfassend:
Übersetzen (131) der Datenabfrage in ein durch das Feldgerät (207) interpretierbares Datenformat durch ein Übersetzungsmodul (217) des Datenkommunikationsmoduls; und/oder Übersetzen (133) der Antwortdaten in ein durch die Leitebenenanwendung (205) interpretierbares Datenformat durch das Übersetzungsmodul (217).

11. Verfahren (100) nach einem der voranstehenden Ansprüche, ferner umfassend:
Abgleichen (135) der Datenabfrage der Leitebenenanwendung (205) mit einem vordefinierten Datenschema (219) der Antwortdaten des Feldgeräts (207) durch das Datenkommunikationsmodul (209); und/oder
Abgleichen (137) der Antwortdaten des Feldgeräts (207) mit dem vordefinierten Datenschema (219) der Antwortdaten des Feldgeräts (207) durch das Datenkommunikationsmodul (209), wobei das Datenschema (219) für das Feldgerät (207) definiert, welche Information des Feldgeräts (207) über eine entsprechende Datenabfrage zugänglich ist; und
Falls die Datenabfrage der Leitebenenanwendung (205) oder die Antwortdaten des Feldgeräts (207) nicht dem Datenschema (219) entspricht, Aussenden (139) einer Fehlermeldung durch das Datenkommunikationsmodul (209) an die Leitebenenanwendung (205) oder das Feldgerät (207), wobei die Fehlermeldung eine fehlerhafte Datenabfrage anzeigt.

12. Verfahren (100) nach einem der voranstehenden Ansprüche, wobei das Datenkommunikationsmodul (209) auf einem externen Sever (221), insbesondere einem Cloud-Sever, oder auf einem mit dem Feldgerät (207) unmittelbar verbundenen industriellen Edge-Gerät ausführbar ist.

13. Verfahren (100) nach Anspruch 12, wobei das auf dem Cloud-Server (221) ausgeführte Datenkommunikationsmodul (209) mit einer Mehrzahl von Feldgeräten (207) verbindbar ist, und wobei das Datenkommunikationsmodul (209) für jedes verbundene Feldgerät (207) individuell angepasste Regelsätze (213) und entsprechende Korrekturmaßnahmen umfasst, wobei das Übersetzungsmodul (217) eingerichtet ist, Datenabfragen in durch die Mehrzahl von Feldgeräten (207) interpretierbare Datenformate zu übersetzen, und wobei das Übersetzungsmodul (217) eingerichtet ist, Antwortdaten in durch von Mehrzahl Leitebenenanwendungen (205) interpretierbare Datenformate zu übersetzen.

14. Verfahren (100) nach einem der voranstehenden Ansprüche, wobei eine Datenkommunikation zwischen der Leitebenenanwendung (205) und dem Datenkommunikationsmodul (209) und/oder zwischen dem Feldgerät (207) und dem Datenkommunikationsmodul (209) über Applikationsprogrammschnittstellen (223) ausführbar ist.

15. Computerprogrammprodukt (300), umfassend Befehle, die bei der Ausführung des Programms durch einen Computer diesen veranlassen, das Verfahren (100) gemäß einem der voranstehenden Ansprüche auszuführen.
